# EUROPÄISCHE PATENTSCHRIFT

(11) **EP 1 241 374 B1**
(45) Veröffentlichungstag und Bekanntmachung des Hinweises auf die Patenterteilung: **10.12.2003**
(21) Anmeldenummer: 02000660.7
(22) Anmeldetag: 11.01.2002
(51) Int. Cl.: F16F 9/516, F16F 9/348, F16F 9/512

(54) **Fluiddämpfer**
Fluid damper
Amortisseur à fluide

(30) Priorität: 13.03.2001 AT 3902001
(43) Veröffentlichungstag der Anmeldung: 18.09.2002
(73) Patentinhaber: Julius Blum Gesellschaft m.b.H., 6973 Höchst (AT)
(72) Erfinder: Krammer, Bernhard, 6973 Höchst (AT)
(74) Vertreter: Hofinger, Engelbert, Dr.Dr.

(56) Entgegenhaltungen:
- EP-A- 0 955 483
- FR-A- 2 426 187
- US-A- 4 372 545

## Beschreibung

Die Erfindung bezieht sich auf einen Fluiddämpfer insbesondere für bewegliche Möbelteile mit einem Zylinder und einen darin linear verfahrbaren Kolben, der mehrere im Abstand voneinander befindliche Ringscheiben aufweist, die mit Durchlaßöffnungen für das Dämpfungsfluid versehen und zum Teil elastisch verbiegbar sind.

Derartige Fluiddämpfer finden Verwendung, um insbesondere die Schließbewegung von beweglichen Möbelteilen, wie Möbeltüren, Klappen oder Schubladen im hintersten Schließbereich zu dämpfen.

Nach dem bekannten Stand der Technik wird der Zylinder vorzugsweise am Möbelkorpus beispielsweise einer Möbelseitenwand oder einem Möbelboden befestigt und die Möbeltüre oder die Frontblende der Schublade stößt beim Schließen an der Kolbenstange des Kolbens an. Durch den Strömungswiderstand des Fluids beim Verschieben des Kolbens entsteht die Dämpfung. Als Fluid wird vorzugsweise eine Hydraulikflüssigkeit, beispielsweise ein Öl, eingesetzt.

Ein Fluid dämpfer mit elastischen verbiegbaren Ringscheiben nach dem Oberbegriff des Anspruchs 1 ist aus dem Dokument FR 2 426 187 bekannt.

Aufgabe der Erfindung ist es, einen Fluiddämpfer der eingangs erwähnten Art dahingehend zu verbessern, daß seine Dämpfwirkung der Geschwindigkeit des bewegten Möbelteiles angepaßt wird.

Die erfindungsgemäße Aufgabe wird dadurch gelöst, daß die Ringscheiben derart angeordnet sind, daß beim Dämpfungshub des Kolbens die gebogene Ringscheibe jeweils die Durchlaßöffnungen der dahinter liegenden Ringscheibe zumindest teilweise abdeckt.

Vorteilhaft ist vorgesehen, daß die Ringscheiben in der Bewegungsrichtung des Kolbens beim Dämpfen von vorne nach hinten mit einer zunehmenden Anzahl von Durchlaßöffnungen versehen sind.

Vorzugsweise sind vier elastisch verbiegbare Ringscheiben und eine hintere starre Ringscheibe, die als Stützscheibe dient, vorgesehen.

Beim Einschieben der Kolbenstange strömt die Hydraulikflüssigkeit durch die Ringspalte zwischen den elastisch verbiegbaren Ringscheiben und der Zylinderwand und durch die Durchlaßöffnungen in der hintersten starren Ringscheibe. Je nach der Geschwindigkeit des bewegten Möbelteiles und somit des Kolbens werden die elastisch verbiegbaren Ringscheiben durch den Strömungswiderstand zurückgebogen.

Je höher derart entstehende Strömungswiderstand ist, umso kleiner wird der wirksame Durchflußquerschnitt der Durchflußöffnungen, da die elastisch verbiegbaren Ringscheiben, wenn sie zurückgebogen werden, die Durchflußöffnungen zum Teil oder zur Gänze abdecken. Die Geschwindigkeit des Kolbens verringert sich dementsprechend.

Wird der Kolben langsamer, wird auch der Strömungswiderstand niedriger und die elastisch verbiegbaren Ringscheiben bewegen sich wieder in ihre Ausgangsstellung, wodurch der wirksame Durchflußquerschnitt vergrößert wird.

Nachfolgend wird ein Ausführungsbeispiel der Erfindung anhand der Figuren der beiliegenden Zeichnungen beschrieben.
Die Fig. 1 zeigt einen Längsschnitt durch einen erfindungsgemäßen Fluiddämpfer,
die Fig. 2 zeigt den Ausschnitt A der Fig. 1
die Fig. 3 zeigt den Ausschnitt B der Fig. 1

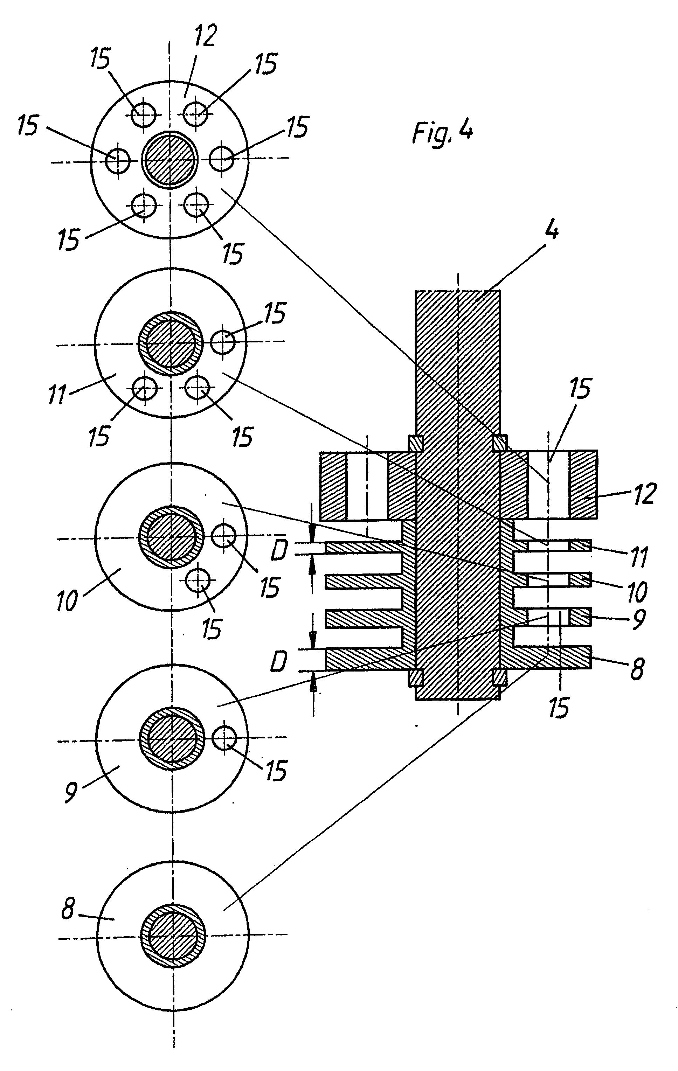

und die Fig. 4 zeigt einen Längsschnitt durch einen erfindungsgemäßen Kolben.

Der erfindungsgemäße Fluiddämfper besteht in herkömmlicher Weise aus einem Zylinder 1, in dessen Zylinderraum 2 ein Kolben 3 verfahrbar ist. Der Kolben 3 sitzt am Ende einer Kolbenstange 4, die durch eine Abschlußwand 5 des Zylinders 1 ragt. In der Abschlußwand 5 ist eine Dichtung 6 vorgesehen, die die Kolbenstange 4 abdichtet.

Auf der Kolbenstange 4 lagert außerhalb des Zylinders 1 eine Feder 7, die den Kolben 3 nach erfolgter Dämpfung über die Kolbenstange 4 und bei geöffneten Möbelteilen wieder in die Funktionsstellung bewegt.

Der Kolben 3 weist im gezeigten Ausführungsbeispiel vier elastisch verbiegbare Ringscheiben 8,9,10,11 auf und eine starre Ringscheibe 12, die als Stützscheibe dient.

Die elastisch verbiegbaren Ringscheiben 8,9,10,11 sind beispielsweise aus einem Gummi oder einem Kunststoffmaterial gefertigt. Die starre Ringscheibe 12 kann ebenfalls aus Kunststoff aber auch aus einem Metall gefertigt sein.

Zwischen den elastisch verbiegbaren Ringscheiben 8,9,10,11 und der Zylinderwand 13 bestehen Ringspalte 14. Die starre Ringscheibe 12 ist dichtend an der Zylinderwand 13 geführt.

Während die erste in Bezug auf die Richtung der Dämpfungsbewegung vorderste Ringscheibe 8 keine Durchlaßöffnung aufweist, ist die zweite elastisch verbiegbare Ringscheibe 9 mit einer Durchlaßöffnung 15, die dritte elastisch verbiegbare Ringscheibe 10 mit zwei Durchlaßöffnungen 15 und die vierte elastisch verbiegbare Ringscheibe 11 mit drei Durchlaßöffnungen 15 versehen. Die hinterste starre Ringscheibe 12 weist sechs Duchlaßöffnungen 15 auf.

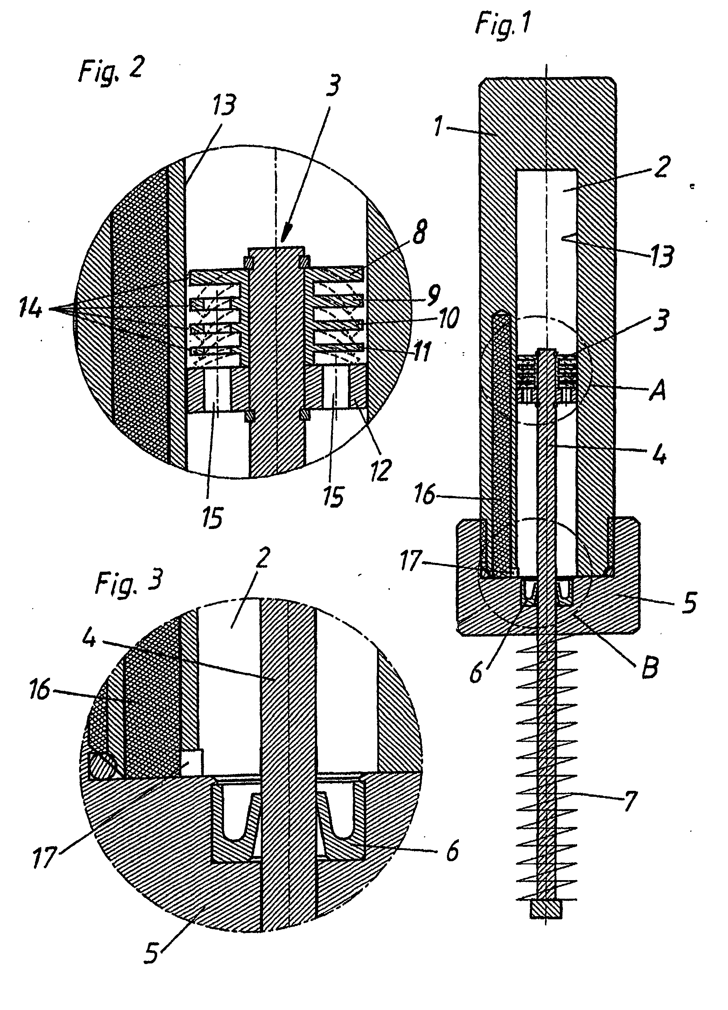

Die Ringscheiben 8,9,10,11,12 sind mit unterschiedlicher Dicke ausgeführt. Während der Dämpfungsbewegung werden bei einer relativ hohen Geschwindigkeit des Kolbens 3 die elastisch verbiegbaren Ringscheiben 8,9,10, 11 wie in der Fig. 2 strichliert gezeigt zurückgebogen und decken dabei die Durchlaßöffnung 15 bzw. die Durchlaßöffnungen 15 der jeweils dahinter befindlichen Ringscheibe 9,10,11 und 12 ab. Auf diese Art verringert sich das Durchflußvolumen der Hydraulikflüssigkeit und der Kolben 3 wird stärker abgebremst. Bei hoher Vortriebsgeschwindigkeit des Kolbens 3 sind sämtliche Durchflußöffnungen 15 der hintersten starren Ringscheibe 12 abgedeckt. In der Ruhestellung sind, egal in welcher Position sich der Kolben 3 befindet, die sechs Durchflußöffnungen 15 in der starren Ringscheibe geöffnet. Sie bleiben auch geöffnet, wenn der Kolben 3 wieder zurück in die Bereitschaftsstellung bewegt wird.

Im gezeigten Ausführungsbeispiel ist in der Zylinderwand mindestens eine Seitenkammer 16 vorgesehen, die über einen Kanal 17 mit dem Zylinderraum 2 in Verbindung steht. Im Ausführungsbeispiel ist die Seitenkammer 16 mit einem Füllmaterial zB Moosgummi ausgefüllt. Die Seitenkammer 16 dient dem Volumensausgleich der Kolbenstange 4.

## Patentansprüche

1. Fluiddämpfer insbesondere für bewegliche Möbelteile mit einem Zylinder (1) und einen darin linear verfahrbaren Kolben (3), der mehrere im Abstand voneinander befindliche Ringscheiben (9, 10, 11, 12) aufweist, die mit Durchlaßöffnungen (15) für das Dämpfungsfluid versehen und zum Teil elastisch verbiegbar sind, **dadurch gekennzeichnet, daß** die Ringscheiben (9, 10, 11, 12) derart angeordnet sind, daß beim Dämpfungshub des Kolbens (3) die gebogene Ringscheibe (9, 10, 11) jeweils die Durchlaßöffnungen (15) der dahinter liegenden Ringscheibe (9, 10, 11, 12) zumindest teilweise abdeckt.

2. Fluiddämpfer nach Anspruch 1, **dadurch gekennzeichnet, daß** die Ringscheiben (9,10,11,12) in der Bewegungsrichtung des Kolbens (3) beim Dämpfen von vorne nach hinten mit einer zunehmenden Anzahl von Durchlaßöffnungen (15) versehen sind.

3. Fluiddämpfer nach Anspruch 1 oder 2, **dadurch gekennzeichnet, daß** in der Bewegungsrichtung beim Dämpfen vorne am Kolben (3) eine elastisch verbiegbare Ringscheibe (8) vorgesehen ist, die keine Durchlaßöffnung (15) aufweist.

4. Fluiddämpfer nach einem der Ansprüche 1 bis 3, **dadurch gekennzeichnet, daß** die in der in der Bewegungsrichtung beim Dämpfen hinterste Ringscheibe (12) des Kolbens (3) als starre Stützscheibe ausgebildet ist.

5. Fluiddämpfer nach einem der Ansprüche 1 bis 4, **dadurch gekennzeichnet, daß** alle elastisch verbiegbaren Ringscheiben (8, 9, 10, 11) aus einem Gummi oder Kunststoffmaterial gefertigt sind.

6. Fluiddämpfer nach einem der Ansprüche 1 bis 5, **dadurch gekennzeichnet, daß** zwischen den elastisch verbiegbaren Ringscheiben (8,9,10,11) und der Zylinderwand (13) Ringspalte (14) vorhanden sind.

7. Fluiddämpfer nach einem der Ansprüche 1 bis 6, **dadurch gekennzeichnet, daß** der Kolben (2) mit vier elastisch verbiegbaren Ringscheiben (8, 9, 10, 11) und einer fünften starren Ringscheibe (12) versehen ist und daß die, in Richtung der Dämpfbewegung des Kolbens (3) vorderste und ersten Ringscheibe (8) keine Durchlaßöffnung, die daran anschließende zweite Ringscheibe (9) eine Durchlaßöffnung (15), die dritte Ringscheibe (10) zwei Durchlaßöffnungen (15) , die vierte Ringscheibe (11) drei Durchlaßöffnungen (15) und die fünfte starre Ringscheibe (12) sechs Durchlaßöffnungen (15) aufweist.

8. Fluiddämpfer nach einem der Ansprüche 1 bis 7, **dadurch gekennzeichnet, daß** in der Zylinderwand (13) mindestens eine Seitenkammer (16) mit Verbindung zum Zylinderraum (2), in dem der Kolben (3) geführt ist, vorgesehen ist.

## Claims

1. A fluid damper, in particular for movable portions of an article of furniture, comprising a cylinder (1) and a piston (3) which is linearly displaceable therein and which has a plurality of mutually spaced annular discs (9, 10, 11) which are provided with through openings (15) for the damping fluid and are in part elastically bendable **characterised in that** in the damping stroke motion of the piston (9, 10, 11) the bent annular disc (9, 10, 11) respectively covers at least in part the through openings (15) of the annular disc (9, 10, 11) disposed therebehind.

2. A fluid damper according to claim 1 **characterised in that** the annular discs (9, 10, 11) are provided with an increasing number of through openings (15) from the front rearwardly in the direction of movement of the piston (3) in the damping operation.

3. A fluid damper according to claim 1 or claim 2 **characterised in that** provided at the front on the piston (3) in the direction of movement in the damping operation is an elastically bendable annular disc (8) which does not have any through opening (15)

4. A fluid damper according to one of claims 1 to 3 **characterised in that** the annular disc (12) of the piston (3), which is rearmost in the direction of movement in the damping operation, is in the form of a rigid support disc.

5. A fluid damper according to one of claims 1 to 4 **characterised in that** all elastically bendable annular discs (8, 9, 10, 11) are made from rubber or plastic material.

6. A fluid damper according to one of claims 1 to 5 **characterised in that** annular gaps (14) are provided between the elastically bendable annular discs (8, 9, 10, 11) and the cylinder wall (13).

7. A fluid damper according to one of claims 1 to 6 **characterised in that** the piston (3), is provided with four elastically bendable annular discs (8, 9, 10, 11) and a fifth rigid annular disc (12) and that the annular disc (8) which is first and foremost in the direction of the damping motion of the piston (3) has no through opening, the second annular disc (9) adjoining same has one through opening (15), the third annular disc (10) has two through openings (15), the fourth annular disc (15) has three through openings (15) and the fifth rigid annular disc (12) has six through openings (15).

8. A fluid damper according to one of claims 1 to 7 **characterised in that** provided in the cylinder wall (13) is at least one side chamber (16) with a communication with the cylinder chamber (2) in which the piston (3) is guided.

## Revendications

1. Amortisseur à fluide, en particulier pour parties de meuble mobiles, avec un cylindre (1) et un piston (3) qui se déplace linéairement dans ce dernier et présente plusieurs disques (9, 10, 11, 12) mutuellement espacés qui sont pourvus d'orifices de passage (15) pour le fluide amortisseur et peuvent en partie se déformer élastiquement, **caractérisé en ce que** les disques (9, 10, 11, 12) sont disposés de telle manière que pendant la course d'amortissement du piston (3), le disque (9, 10, 11) replié recouvre au moins partiellement les orifices de passage (15) du disque (9, 10, 11, 12) situé derrière.

2. Amortisseur à fluide selon la revendication 1, **caractérisé en ce que** les disques (9, 10, 11, 12) sont pourvus d'un nombre croissant d'orifices de passage (15) dans la direction de déplacement du piston (3) de l'avant vers l'arrière lors de l'amortissement.

3. Amortisseur à fluide selon la revendication 1 ou 2, **caractérisé en ce que** dans la direction de déplacement du piston (3) pour l'amortissement, il est prévu à l'avant dudit piston (3) un disque (8) pouvant se déformer élastiquement qui ne comporte pas d'orifice de passage (15).

4. Amortisseur à fluide selon l'une des revendications 1 à 3, **caractérisé en ce que** le disque (12), situé le plus en arrière dans la direction de déplacement pour l'amortissement, du piston (3) est réalisé sous la forme d'un disque d'appui rigide.

5. Amortisseur à fluide selon l'une des revendications 1 à 4, **caractérisé en ce que** tous les disques (8, 9, 10, 11) pouvant se déformer élastiquement sont fabriqués en caoutchouc ou en matière plastique.

6. Amortisseur à fluide selon l'une des revendications 1 à 5, **caractérisé en ce que** des interstices annulaires (14) sont présents entre les disques (8, 9, 10, 11) pouvant se déformer élastiquement et la paroi (13) du cylindre.

7. Amortisseur à fluide selon l'une des revendications 1 à 6, **caractérisé en ce que** le piston (3) est pourvu de quatre disques (8, 9, 10, 11) pouvant se déformer élastiquement et d'un cinquième disque (12) rigide et que, dans le sens du déplacement d'amortissement du piston (3), le premier disque (8), situé le plus à l'avant, ne comporte pas d'orifice de passage, le deuxième disque (9), suivant le précédent, comporte un orifice de passage (15), le troisième disque (10) deux orifices de passage (15), le quatrième disque (11) trois orifices de passage (15) et le cinquième disque (12) rigide six orifices de passage (15) .

8. Amortisseur à fluide selon l'une des revendications 1 à 7, **caractérisé en ce que** dans la paroi de cylindre (13), il est prévu au moins une chambre latérale (16) communiquant avec la chambre de cylindre (2) dans laquelle est guidé le piston (3).
